# EUROPEAN PATENT APPLICATION

(11) **EP 3 674 989 A1**
(43) Date of publication of application: **01.07.2020**
(21) Application number: 19219878.6
(22) Date of filing: 27.12.2019
(51) Int. Cl.: G06N 3/04

(54) **DISTRIBUTED NEURAL NETWORKS FOR EDGE DEVICES**

(30) Priority: 30.12.2018 US 201862786536 P; 16.12.2019 US 201916715176
(71) Applicant: Robert Bosch GmbH, 70442 Stuttgart (DE)
(72) Inventor: PETERS, Christian, Mountain View, CA California 94041 (US); ROCZNIK, Thomas, Mountain View, CA California 94040 (US); DUERICHEN, Robert, 70439 Stuttgart (DE)
(74) Representative: Isarpatent

(57) **Abstract**

To efficiently execute deep convolutional neural networks (CNN) on edge devices (e.g., wearable device like an Apple Watch or FitBit) it may be necessary to split the output tasks across different entities. For edge devices with multiple sensors that are connected to multiple hubs, simple activity spotting may then be executed on a sensor while the hub resides in a sleep-like state. The hub may then be activated when an activity is detected by a sensor and further activity classification may then be performed. It is also contemplated that the edge device may include multiple hubs for simultaneous processing of multiple classification tasks.

## Description

### CROSS-REFERENCE TO RELATED APPLICATIONS

This application claims the benefit of U.S. provisional application Serial No. 62/786,536 filed December 30, 2018, the disclosure of which is hereby incorporated in its entirety by reference herein.

### TECHNICAL FIELD

The following relates generally to convolutional neural networks (CNN) and more specifically to a distributed CNN where tasks, e.g., activity spotting and classification, are processed across different sensors or hubs.

### BACKGROUND

Convolutional neural network (CNN) is a class of deep, feed-forward artificial neural networks, most commonly applied to many different applications that include computer vision and speech recognition. Prior CNN models are typically executed on a single entity, e.g., a dedicated graphical processing unit (GPU) or neuronal network accelerator that do not process multiple different tasks together.

### SUMMARY

In one embodiment, a system (e.g., a sensor system) and method is disclosed for receiving a first data from a first sensor. A first activity spotting feature is extracted from a first data received from a first sensor using a first set of convolutional layers. A second data is received from a second sensor. A second activity spotting feature is extracted from a second data received from a second sensor using a second set of convolutional layers. An activity classification is extracted from the first activity spotting feature and the second activity spotting feature using a third set of convolutional layers and a softmax layer.

The first activity spotting feature and the second activity spotting feature may further be extracted using a first and second set of pooling layers. The first activity spotting feature and the second activity spotting feature may further be extracted using a second and third softmax layer. The activity classification may also be extracted using a third set of pooling layers. A first interrupt signal and a second interrupt signal may also be generated when the first activity spotting feature and the second activity spotting feature indicates the first and the second sensed activity has occurred. The third set of convolutional layers and the softmax layer may also be activated from a sleeping mode state upon receiving the first interrupt signal and the second interrupt signal.

### BRIEF DESCRIPTION OF THE DRAWINGS

Figure 1 is a diagram of a convolutional neural network (CNN) having one or more convolutional layers, one or more pooling layers, a fully connected layer, and a softmax layer;
Figure 2 is a diagram of a CNN model with multiple output task layers;
Figure 3 is a diagram of an edge device for implementing a distributed CNN;
Figure 4 is another diagram of the distributed CNN;
Figure 5 is another diagram of the distributed CNN; and
Figure 6 is another diagram of the distributed CNN.

### DETAILED DESCRIPTION

As required, detailed embodiments are disclosed herein; however, it is to be understood that the disclosed embodiments are merely exemplary and may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present embodiments.

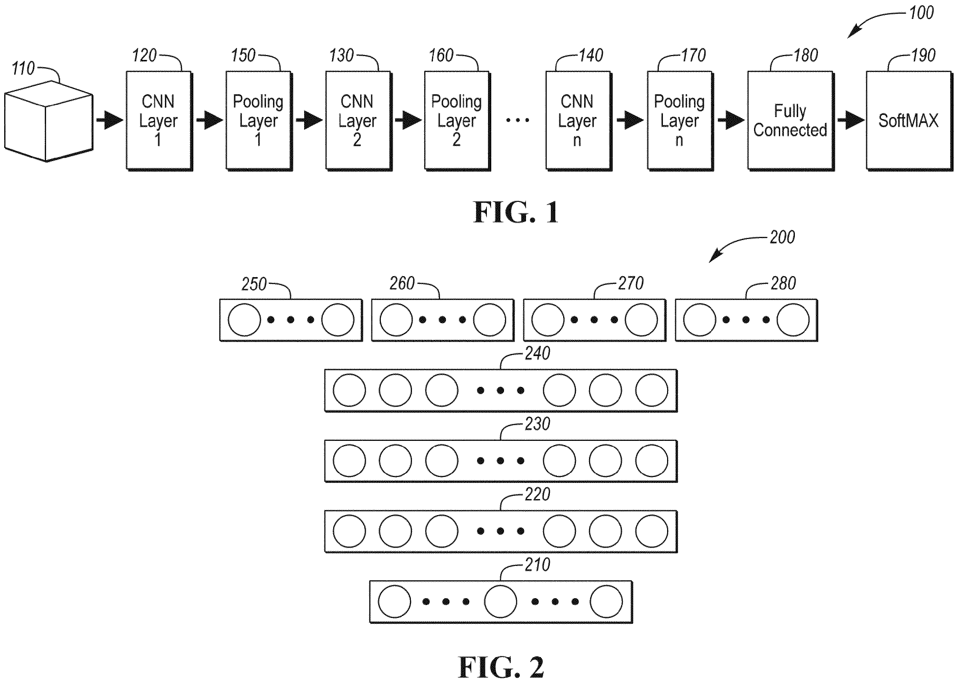

In the neural network field, the use of deep convolutional neural networks (CNN) or recurrent neuronal networks has increased for a wide variety of applications including computer vision (e.g., object recognition or facial recognition) and speech recognition. With reference to Figure 1, a CNN 100 may be provided input data 110. The CNN 100 may include one or more convolutional layers 120-140; one or more pooling layers 150-170; a fully connected layer 160; and a softmax layer 170.

The input data 110 may be raw image data, voice data, or text data. Input data 110 may also include measurements received from sensor readings. Alternatively, input data 110 may be lightly processed prior to being provided to CNN 100. Convolutional layers 120-140 may be operable to extract features from input data 110. Convolutional layer 120-140 generally applies filtering operations (e.g., kernels) before passing on the result to the next layer of the CNN 100. For instance, convolutional layer 120-140 may apply a filter over the image, scanning a few pixels for input data 110 that is a raw image, creating a feature map that may be used to predict a class to which each feature may belong.

The CNN may also include one or more pooling layers 150-170 that receives the feature map from the one or more convolution layer 120-140. Pooling layers 150-170 may include one or more pooling layer units that apply a pooling function to one or more features (or feature maps) computed at different bands using a pooling function. For instance, pooling layer 150 may apply a pooling function to the feature map received from convolutional layer 120. The pooling function implemented by pooling layers 150-170 may be an average or a maximum function or any other function that aggregates multiple values into a single value. It is contemplated that the pooling layers 150-170 may operate to reduce the amount of information in each feature (or feature map) obtained from the convolutional layers 120-140 while attempting to maintain information that may be pertinent.

Next, a fully connected layer 180 may attempt to learn non-linear combinations for the high-level features which are the outputs received from the convolutional layers 120-140 and pooling layers 150-170. For instance, the fully connected layer 180 may operate on the output of the convolutional layers 120-140 and pooling layers 150-170 (which may represent the activation maps of high-level features) and the fully connected layer 180 may then determine which features correlate to a particular class. Lastly, CNN 100 may include a softmax layer 190 that combines the outputs of the fully connected layer 180 using softmax functions.

Models like CNN 100 typically require high energy consumption, memory storage, and calculation/computational power. CNN 100 may typically be executed on a cloud computing system that includes a dedicated microcontroller, special hardware (e.g., neuronal network accelerator) or graphic processing unit (GPU). It is not generally feasible to execute CNN 100, that includes multiple layers and a high number of convolutional filters, on an edge device that has less processing power and memory (e.g., a smart watch or iPhone).

It is further difficult to execute multi-task CNN models where a single CNN model has multiple outputs for different tasks may further strain the limited processing power and memory of a device. For instance, Figure 2 illustrates a CNN 200 having an input layer 210 and one or more hidden layers 220-240. It is understood that CNN 200 is just representative, and that the shown input layer 210 and hidden layers 220-240 may include one or more convolutional layers, pooling layers, fully connected layers and a softmax functions like those described with respect to CNN 100. It is also understood that the input layer 210 and hidden layers 220-240 may constitute a shared feature representation. As also shown, CNN 200 may generate four output layers 250-280. The four output layers 250-280 may be unique and represent a given task or classification.

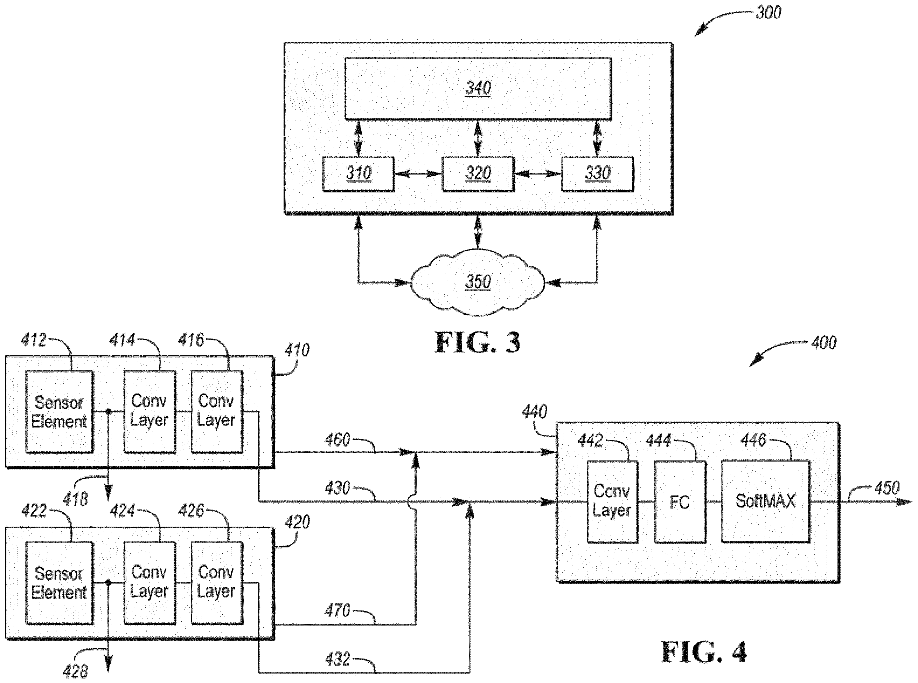

Figure 3 illustrates an edge device 300 that might execute CNN 200. Edge device might function to detect user activity (e.g., a FitBit) using one or more inertial sensors. Such exemplary inertial sensors that might be included within edge device 300 include an accelerometer sensor 310, heart rate sensor 320, and pressure sensor 330. However, sensors 310-330 are merely illustrative, and additional or different sensors might be used depending on the function of edge device 300. Sensors 310-330 might also include a transducer element, an analog front-end and an analog-to-digital (A/D) converter (not shown). Sensors 310-330 might also transmit data to one or more central processing units 340 (CPU 340) or hubs using bus communication protocols like I²C, SPI, or UART.

Edge device 300 might also be designed to execute one or more CNN models, like CNN 200, within sensors 310-330 or CPU 340. It is contemplated that CNN 200 may be executed within sensor 310-330 or CPU 340 when unimodal sensor data (where no sensor fusion is necessary) is being evaluated and the output tasks or classifications have similar or more simplistic complexity. But is also contemplated that it may not be feasible to execute CNN 200 within sensors 310-330, CPU 340, or within edge device 300 itself when more complex tasks or classifications are being performed. For more complex tasks or classifications, it may be necessary to split CNN 200 between sensors 310-330 and CPU 340. It may also be necessary for more complex tasks or classifications to distribute a portion of CNN 200 to an external system 350 like a cloud computing system. Edge device 300 might communicate with external system 350 using known wired or wireless connections including ethernet, WiFi, or cellular.

With reference to Figure 2, it is also contemplated that output layers 250-280 might perform "activity spotting" and "activity classification." The activity spotting executed by edge device 300 may include a binary classification that determines whether relevant activity is or is not present. For instance, binary classifications might include determining whether a user is moving or standing still. These binary classifications generally have a low algorithmic complexity. To determine whether a user is walking or standing still, CNN 200 might be executed on accelerometer sensor 310 to determine whether the binary task is being performed. For simple classification problems such as activity spotting, CNN 200 might include a few convolutional layers (e.g. two layers). While accelerometer 310 might execute CNN 200 with a few convolutional layers to perform more simplistic binary classifications, CNN 200 might not be able to use the data provided by accelerometer alone to perform more complex activity classification.

Instead, activity classification that determines the kind of activity being performed generally requires a greater level of algorithmic complexity. More complex activity classifications might therefore require a distributed CNN model where the fusion of multiple sensor modalities is performed to accurately determine the user's activity. For instance, Figure 4 illustrates a distributed CNN 400 that might be included within an edge device like a wearable fitness device.

Sensors 410, 420 include a sensor element 412, 422 that outputs sensor data 418, 428. Sensor data 418, 428 might be raw analog or digital data that is generated by sensor element 412, 422 itself, or it is contemplated that some additional processing might be performed to sensor data 418, 428. Sensors 410, 420 might include sensors used within a wearable fitness edge device like an accelerometer, heart rate sensor, global positioning sensor, altimeter, temperature sensor, bio-impedance sensor, or optical sensor. Sensors 410, 420 further include two convolutional layers 414-416, 424-426 that might be used to generate activity spotting feature 430, 432. Activity spotting feature 430, 432 might include, for example, the number of steps a user has walked, whether the user is moving or resting, or the user's body temperature. To conserve power, sensors 410, 420 may also reside in a sleeping mode state until awoken by activity detected by sensor elements 412, 422.

Activity spotting feature 430 generated by sensor 410 and activity spotting 432 generated by sensor 420 may then be provided to hub 440. It is contemplated that hub 440 might include any number of additional convolutional layers 442, fully connected layers 444 and softmax layers 446. Hub 440 may also be fully programmable via a suitable interface to modify or change the convolutional layers 442, fully connected layers 444 and softmax layers 446. It is contemplated that hub 440 might be a CPU internal to an edge device or hub 440 might a cloud computing system external to an edge device.

Each sensor 410, 420 might further be programmed to generate an interrupt signal 460, 470 in the event a given activity is detected. For instance, sensor 410 might be an accelerometer that is used to detect a user's activity like the number of steps taken. Sensor 420 might be a temperature sensor that is used to detect a user's body temperature. Sensor 410 might generate interrupt signal 460 when the user is walking. Similarly, sensor 420 might also generate an interrupt signal 470 upon determining the user's body temperature is rising. It is contemplated, that hub 440 might include a programmable sleeping mode state that is used to conserve power consumption during normal operation. Interrupt signal 460 or 470 might then be used to awake hub 440 from sleep mode when sensor 410, 420 spot a given activity-e.g., user is walking or user's body temperature increases.

Once awoken from sleep mode by either interrupt signal 460 or 470, hub 440 will generate an activity classification 450 using the provided activity spotting feature 430, 432. Or hub 440 may be awoken from sleep mode by data that is cached within memory of the sensor 410, 4120 that detected the activity. For instance, activity spotting feature 430 might indicate the user is walking and activity spotting 432 might indicate the user's body temperature. Hub 440 receives and processes activity spotting feature 430, 440 using convolutional layers 442, fully connected layers 444 and softmax layer 446 to generate an activity classification 450 indicating whether user is running very aggressively or whether user is on a casual walk. It is contemplated that to generate an activity classification 450, hub 440 might only require softmax layer 446, but fully connected layers 444 might not be needed.

Distributed CNN 400 may also include different settings that can be programmed to switch between different modes. For example, distributed CNN 400 may be programmed such that one mode can be optimized to detect gym activities and another mode to detect different swimming styles. The information needed to perform these different settings can be stored in memory (not shown) of the sensors 410, 420 or the hub 440. The memory used to store these settings can include any type of conventionally known memory, including flash memory or random-access memory (RAM).

While Figure 4 illustrates just two sensors 410-420, it is contemplated that the distributed CNN 400 might include any number of additional sensors. Sensors can be connected to the hub 440 dependent on the complexity of the neural network and resources of the hardware available. Even more complex tasks can use additional hubs to build more complex networks. The additional hubs can be provided activity spotting data from the sensors or classification data from another hub. It is further contemplated that the hubs may also be capable of sharing resources for other classification tasks.

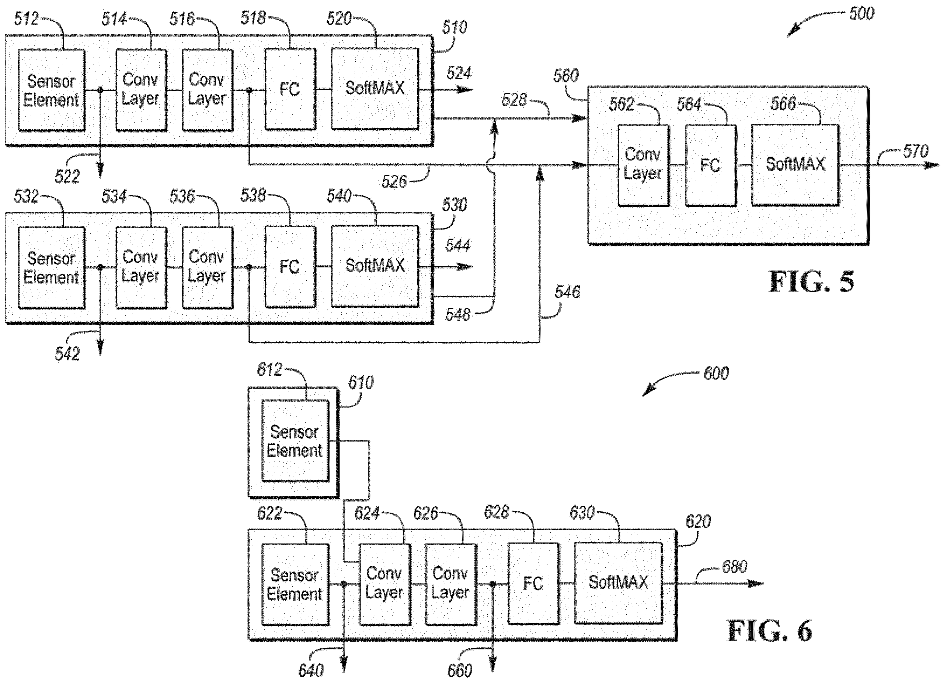

For instance, Figure 5 illustrates another distributed CNN 500. Sensor 510 may include a sensor element 512, and a full CNN model having one more convolutional layers 514-516, pooling layers (not shown), fully connected layers 518, and softmax layers 520. Sensor 530 also may include a sensor element 532, and a second full CNN model having one more convolutional layers 534-536, pooling layers (not shown), fully connected layers 538, and softmax layers 540. It is contemplated that sensors 510, 530 might not include a full CNN model, but may instead include just one or more convolutional layers like that described previously.

Also, sensor elements 512, 532 may again provide raw data to be used additional sensors or hubs located within distributed CNN 500. Sensors 510, 530 may also include a sleep-mode for power conservation, and sensors 510, 530 may awake from the sleep-mode based on raw data 522, 542 generated by sensor elements 512, 532. Or, sensors 510, 530 may awake from the sleep-mode based on an interrupt signal (not shown) provided by another sensor or hub located elsewhere in the distributed CNN 500.

Like previously discussed, sensors 510, 530 may output activity spotting feature 526, 546 based on the classifications performed by convolutional layers 514-516 and 534-536. Hub 560 may again remain in a sleep-mode state until sensors 510, 530 provide a wake-up interrupt signal 528, 548. Upon receiving the wake-up interrupt signal, hub 560 may further process activity spotting feature 526, 546 to generate an activity classification 570. Again, hub 560 may generate activity classification 570 by processing activity spotting feature 526, 546 using convolutional layer 562, fully connected layers 564, or softmax layers 566. It is contemplated that hub 560 may include a simple CNN with only one convolutional layer, or hub 560 may be a more complex CNN model having multiple convolutional layers.

Like previously discussed, it is contemplated that distributed CNN 500 may be implemented in an edge device that detects user activity. It is also contemplated that the data from multiple sensors may be provided to multiple hubs simultaneously for processing. For example, sensor 510 may be an accelerometer that is connected to an activity spotting hub (e.g., hub 560) and a vital sensing hub (not shown). First layer CNN features may then be computed on sensor 510, including activity spotting feature 526. Sensor 530 may be a pressure sensor where the first layer features also are computed to provide activity spotting feature 526. Hub 560 may process the received activity spotting feature 526, 546 to generate activity classification 570 that indicates accurately how may steps up a stairwell a user has climbed. At the same time, a vital hub may receive activity spotting feature 526 from sensor 510 and photoplethysmography (PPG) data from another sensor located within distributed CNN 500. The vital hub may then fuse the PPG data and accelerometer data (i.e., activity spotting data 526) to generate classification data that includes robust heart rate and/or heart rate evaluation estimations.

Sensor 510, 530 may also generate activity classifications 524, 544. More particularly, sensor 510, 530 may include a CNN model having fully connected layers 518, 538 and softmax layers 520, 540 to classify events. It is contemplated that the distributed CNN 500 may include additional sensors or hubs (not shown) that receive and use activity classifications 524, 544 for additional classification tasks. Lastly, it is contemplated that fully connected layers 518, 538 may not be required, but softmax layers 520, 540 may be required to generate activity classifications 524, 544.

Figure 6 illustrates another distributed CNN 600 that includes sensor 610 and sensor 620. Unlike previously discussed, sensor 610 includes just a sensor element 612 that generates raw sensor data 614. As shown, sensor 610 may not include any CNN stages. Sensor 620, however, may include one or more convolutional layers 624, 626; a fully connected layer 628; and a softmax layer 630. Sensor 620 may be arranged to generate activity spotting data 660 as described above. Activity spotting data 660 may then be provided to additional sensors or hubs located elsewhere within distributed CNN 600. Sensor 620 may also include one or more fully connected layers 628 and softmax layers 630 that can generate activity classification data 680. As described previously, activity classification data 680 may also be provided to additional sensors or hubs located elsewhere within distributed CNN 600. It is contemplated that distributed CNN may allow easy integration of third party or older non-smart sensors-i.e., sensors without a CNN.

The processes, methods, or algorithms disclosed herein can be deliverable to/implemented by a processing device, controller, or computer, which can include any existing programmable electronic control unit or dedicated electronic control unit. Similarly, the processes, methods, or algorithms can be stored as data, logic, and instructions executable by a controller or computer in many forms including, but not limited to, information permanently stored on non-writable storage media such as ROM devices and information alterably stored on writeable storage media such as floppy disks, magnetic tapes, CDs, RAM devices, and other magnetic and optical media. The processes, methods, or algorithms can also be implemented in a software executable object. Alternatively, the processes, methods, or algorithms can be embodied in whole or in part using suitable hardware components, such as Application Specific Integrated Circuits (ASICs), Field-Programmable Gate Arrays (FPGAs), state machines, controllers or other hardware components or devices, or a combination of hardware, software and firmware components.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

## Claims

1. A method for generating an activity classification, comprising:
receiving a first data from a first sensor;
extracting from the first data a first activity spotting feature using a first set of convolutional layers;
receiving a second data from a second sensor;
extracting from the second data a second activity spotting feature using a second set of convolutional layers; and
extracting from the first activity spotting feature and second activity spotting feature an activity classification using a third set of convolutional layers and a softmax layer.

2. The method of claim 1, further comprising: extracting the first activity spotting feature using a first set of pooling layers; and extracting the second activity spotting feature using a second set of pooling layers.

3. The method of claim 1, further comprising: extracting the first activity spotting feature using a second softmax layer; and extracting the second activity spotting feature using a third softmax layer.

4. The method of claim 1, further comprising: extracting the activity classification using a third set of pooling layers.

5. The method of claim 1, further comprising: extracting the first activity spotting feature when the first sensor determines a first sensed activity has occurred; and extracting the second activity spotting feature when the second sensor determines a second sensed activity has occurred.

6. The method of claim 5, wherein the first activity spotting feature is a first binary classification indicating whether the first sensed activity has occurred; and the second activity spotting feature is a second binary classification indicating whether the second sensed activity has occurred.

7. The method of claim 6, further comprising: generating a first interrupt signal when the first activity spotting feature indicates the first sensed activity has occurred; and generating a second interrupt signal when the second activity spotting feature indicates the second sensed activity has occurred.

8. The method of claim 7, wherein the third set of convolutional layers and the softmax layer are activated from a sleeping mode state upon receiving the first interrupt signal and the second interrupt signal.

9. The method of claim 1, wherein the activity classification determines a user activity being performed.

10. A method for extracting an activity classification, comprising:
receiving a first data from a first sensor;
receiving a second data from a second sensor;
extracting one or more activity spotting features from the first data and the second data using a first set of convolutional layers; and
extracting an activity classification from the one or more activity spotting features using a softmax layer.

11. The method of claim 10, further comprising: extracting the one or more activity spotting features using a set of pooling layers.

12. The method of claim 10, further comprising: extracting the one or more activity spotting features using a second softmax layer.

13. The method of claim 10, further comprising: extracting the activity classification using a set of pooling layers.

14. The method of claim 10, further comprising: extracting the one or more activity spotting features when the first sensor determines a first sensed activity has occurred.

15. The method of claim 14, wherein the one or more activity spotting features are a first binary classification indicating whether the first sensed activity has occurred.

16. A system that extracts an activity classification, comprising:
a first sensor system that receives a first sensed data when a first user activity has occurred, the first sensor system extracting a first activity spotting feature from the first sensed data using a first set of convolutional layers;
a second sensor system that receives a second sensed data when a second user activity has occurred, the second sensor system extracting a second activity spotting feature from the second sensed data using a second set of convolutional layers; and
a hub that extracts an activity classification from the first activity spotting feature and the second activity spotting feature using a third set of convolutional layers and a softmax layer.

17. The system of claim 16, wherein the first sensor system further extracts the first activity spotting feature using a first set of pooling layers; and the second sensor system further extracts the second activity spotting feature using a second set of pooling layers.

18. The system of claim 16, wherein the first sensor system extracts the first activity spotting feature using a second softmax layer; and the second sensor system extracts the second activity spotting feature using a third softmax layer.

19. The system of claim 16, wherein the hub extracts the activity classification using a third set of pooling layers.

20. The system of claim 16, wherein the first sensor system generates a first interrupt signal when the first activity spotting feature indicates a first sensed activity has occurred; and the second sensor system generates a second interrupt signal when the second activity spotting feature indicates a second sensed activity has occurred.
